Europäisches Patentamt

(19) European Patent Office

Office européen des brevets

(11) Publication number: **0 343 155 B1**

(12) **EUROPEAN PATENT SPECIFICATION**

(45) Date of publication of patent specification:
08.05.91 Bulletin 91/19

(51) Int. Cl.⁵: **B28B 21/36, B29C 49/24, B29C 49/36**

(21) Application number: **86907156.3**

(22) Date of filing: **10.11.86**

(86) International application number:
**PCT/US86/02427**

(87) International publication number:
**WO 88/03466 19.05.88 Gazette 88/11**

(54) **IN-MOLD LABEL DISPENSER FOR BLOW MOLDING.**

(43) Date of publication of application:
29.11.89 Bulletin 89/48

(45) Publication of the grant of the patent:
08.05.91 Bulletin 91/19

(84) Designated Contracting States:
AT BE CH DE FR GB IT LI LU NL SE

(56) References cited:
US-A- 4 585 408
US-A- 4 639 206

(73) Proprietor: PLASTIPAK PACKAGING INC.
9135 General Court
Plymouth, MI 48170 (US)

(72) Inventor: DARR, Richard, C.
3645 Good Road
Seville, OH 44273 (US)

(74) Representative: Geldard, David Guthrie et al
URQUHART-DYKES AND LORD Tower House
Merrion Way
Leeds West Yorkshire LS2 8PA (GB)

## Description

This invention relates to an in-mold label dispenser for a plastic blow molding machine and has particular utility for use with a multiple cavity mold type of blow molding to supply at least one label to each cavity during each blow molding cycle.

Blow molding machines conventionally provide a parison, i.e. a tube of hot plastic, between open sections of a mold. Closing of the mold then clamps the parison and allows air to be blown into the parison such that it assumes the shape of the mold. After suitable cooling has taken place, the mold sections are opened to allow ejection of the molded part.

Blow molded parts such as containers have conventionally included paper labels that are glued thereto after the molding to identify the contents of the container to the consumer. One problem is that such paper labels can become wrinkled if dampened and can also become detached from the container if a waterproof glue is not used. Also, paper labels require a separate labeling step after the molding which thus adds to the cost of the container.

In-mold labeling has been developed in the recent past to provide superior bonding of labels to blow molded plastic parts. This in-mold labeling is performed by initially inserting a label within the mold prior to the introduction of the parison and by then closing sections of the mold in preparation for the blowing operation. The subsequent blowing operation forms the parison around the label to the shape of the mold and provides a permanent bond which is incapable of being broken by moisture or otherwise. Also, such in-mold labeling provides a smooth transition between the label and the adjacent surface of the molded plastic part and further provides additional strength since the label cooperates with the plastic in resisting deformation. Such strengthening also allows the use of less plastic to blow mold the part and thereby reduces the ultimate cost to the consumer. Furthermore, when utilized with containers for carbonated or other beverages, it is believed that in-mold labeling reduces the flow of carbon dioxide and other fluids through the container wall over a period of time and thereby increases the shelf life.

Prior in-mold label dispensers for blow molding machines conventionally include a label carrier having a vacuum cup that receives a label from a label magazine and is then moved to deposit the label within the mold cavity whereupon termination of a vacuum drawn at the suction cup allows a vacuum drawn at the mold cavity to secure the label in position in preparation for the blow molding. Such vacuum type label carriers have previously been mounted on linkages that move the labels in an angular path with respect to the direction of opening and closing movement of mold sections of the mold in order to permit depositing of the labels in the confined space permitted by the extent of the mold opening. With the linkage type of label carrier, only one label can be deposited within the mold at a given time since movement thereof on the linkage toward one mold section interferes with movement of a similar linkage toward an opposed mold section for depositing another label.

Another prior art type of in-mold label dispenser is disclosed by US Patents 4, 355, 967 and 4, 359, 314 and includes a label carrier that is moved along an abruptly curved path by a complex linkage which executes a 180° turn in order to transfer labels from a label magazine to the mold in preparation for molding. With this complex linkage type label dispenser, it is likewise not possible to deposit more that one label in the mold at a given time due to the limited space present upon opening of the mold.

Other in-mold label dispensers are disclosed in US Patents 3, 324, 508, 3, 292, 209 ; 4, 397, 625 ; 4, 479, 644 ; 4, 479, 770 ; 4, 479, 771 and 4, 498, 854.

US Patent 4, 585, 408, taken as the starting point for Claim 1, discloses an in-mold label dispenser for a plastic blow molding machine including a mold having a pair of mold sections each of which includes a cavity section, said mold sections being movable toward and away from each other between an open position spaced from each other and a closed position where the cavity sections thereof cooperate to define an enclosed cavity in which blow molding is performed, a base having first and second portions located on opposite sides of the mold, a label magazine mounted on the first base portion on one side of the mold, a dispensing head mounted on the first base portion for movement between a withdrawn position adjacent the label magazine and an inserted position between the open mold sections ; a label carrier on the dispensing head for receiving a label from the magazine with the dispensing head in the withdrawn position and for transferring the label to the cavity section of one mold section with the dispensing head in the inserted position between the open mold sections.

Certain plastic blow molds are constructed such that an elongated guide extending between the opposite sides of the mold provides support for the movable dispensing head or carriage in which the label carriers are mounted. Normally the dispensing head or carriage is pivoted about the guide to provide movement of the label carriers to the label transfer position where the labels are released and secured to the mold by vacuum. However, with certain mold constructions, there is insufficient room to position an elongated guide extending between the opposite sides of the mold and still permit the movement of the label carriers to the label transfer position in the inserted position between the open mold cavities. While it is possible to support the dispensing head or carriage in a cantilevered fashion for movement to the inserted position for depositing the labels, this results in a decreased accuracy in label placement and a resultant decrease in quality of the labeled product after the blow molding.

The invention seeks to provide an improved in-mold label dispenser for use with a plastic blow molding machine to provide accurate placement of labels within the mold even when the mold construction does not permit the use of an elongated guide extending between the opposite sides of the mold to guide a dispensing head or carriage used to transfer the labels to the mold.

The invention is characterised by the features set forth in Claim 1.

In its preferred construction, the in-mold label dispenser includes first and second supports respectively mounted for movement on the first and second base portions, preferably in a pivotal manner about a common axis. The dispensing head and the first locator are mounted on the first support for movement with respect thereto between the withdrawn and inserted positions with respect to the open mold. The second locator is mounted on the second support on the opposite side of the mold from the first support that mounts the dispensing head and the first locator. A first actuator extends between the first base portion and the first support and is operable to move the first support and the dispensing head thereon between an aligned position with respect to the open mold and a label transfer position. A second actuator extends between the second base portion and the second support and is operable with the dispensing head in the inserted position to cooperate with the first actuator in moving the dispensing head between the mold aligned and label transfer positions.

A further preferred embodiment of the in-mold label dispenser also includes at least one second label magazine mounted on the second base portion on the opposite side of the mold to the first base portion. The second dispensing head is mounted on the second base portion for movement between a withdrawn position adjacent the second label magazine and an inserted position between the open mold sections. The second locator is mounted on the second dispensing head and is engaged with the first locator on the first dispensing head upon movement of the first and second dispensing heads to the inserted positions thereof between the open mold sections. A label carrier on the second dispensing head receives a label from the second magazine in the withdrawn position and transfers the label to the mold in the inserted position.

This further embodiment of the in-mold label dispenser, like the first described embodiment, preferably includes first and second sets of label magazines respectively mounted on the first and second base portions.

First and second sets of the label carriers are respectively associated with the first and second sets of label magazines and are respectively mounted on the pair of dispensing heads to supply multiple labels to the mold as the dispensing heads move to the inserted positions thereof between the open mold sections.

The invention will be better understood from the following detailed description of the best modes for carrying out the invention when taken in connection with the accompanying drawings.

Figure 1 is a schematic top plan view of a mold of a plastic blow molding machine and an in-mold label dispenser that is utilized therewith and constructed in accordance with the present invention with a dispensing head thereof illustrated in a withdrawn position adjacent label magazines ;

Figure 2 is a view similar to Figure 1 but illustrated with the dispenser head moved to an inserted position between open mold sections of the mold to provide transfer of labels from the magazines to the mold ;

Figures 3A, 3B, and 3C, arranged in order from left to right, cooperatively provide an elevation view taken along the direction of line 3-3 in Figure 1 to further illustrate the construction of the in-mold label dispenser ;

Figure 4 is an elevation view of the end of the in-mold label dispenser taken along the direction of line 4-4 in Figure 3C ;

Figure 5 is a perspective view of a locator that cooperates with another locator on the dispensing head as illustrated in Figure 2 to locate the dispensing head as labels are transferred to the mold ; and

Figures 6 and 7 are schematic views respectively similar to Figures 1 and 2 and illustrating an alternate embodiment which includes two dispensing heads for transferring labels from associated label magazines on opposite sides of the mold to the mold cavity sections.

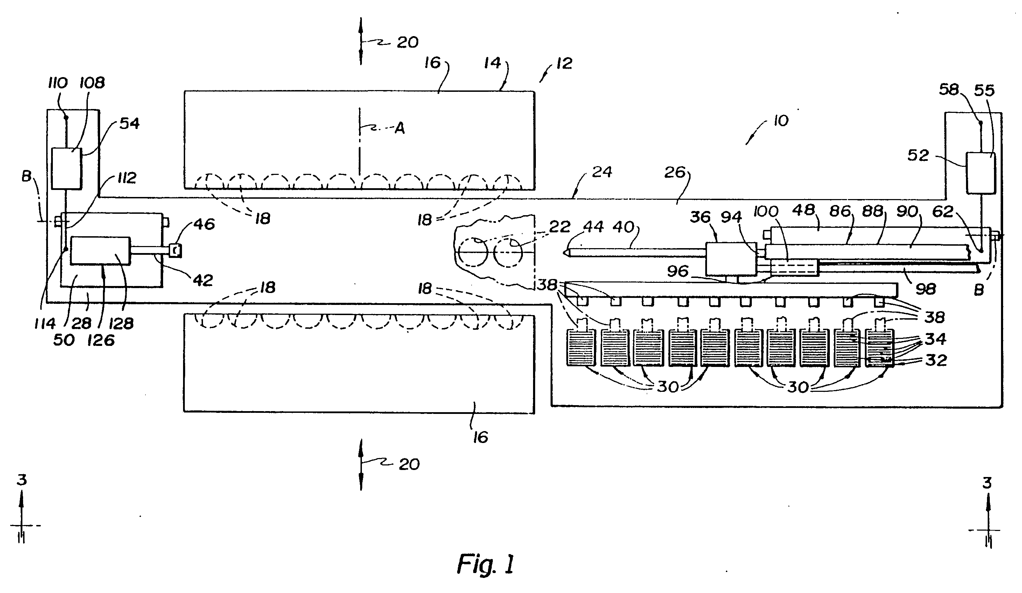

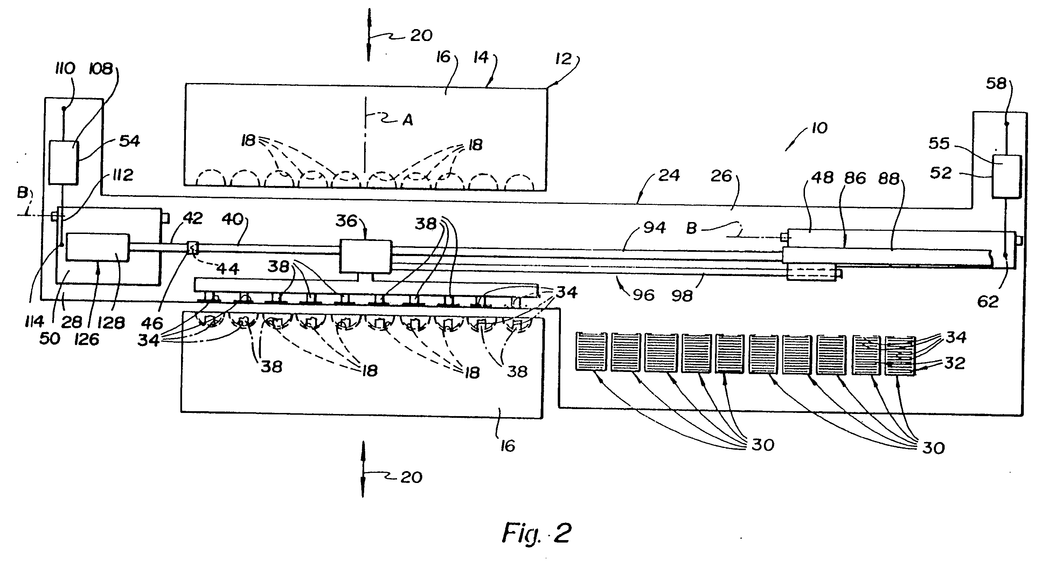

With reference to the schematic view of Figures 1 and 2 of the drawings, an in-mold label dispenser 10 constructed in accordance with the present invention is utilized with a plastic blow molding machine 12 including a mold 14 having a pair of mold sections 16. In-mold label dispenser 10 has particular utility when utilized with a mold 14 of the multiple cavity type illustrated with each mold section 16 including a plurality of cavity sections 18. The particular utility of the in-mold label dispenser 10 with multiple cavity molds is greatest when the cavity sections 18 are arranged in line with each other and when there is a large number of cavity sections such as the ten cavity sections 18 on each mold section 16 as illustrated. However, it should be appreciated that the in-mold label dispenser can also be used with a single cavity mold as will be apparent from the following description.

Mold sections 16 of the mold 14 are movable along an axis A as indicated by arrows 20 in a conventional manner toward and away from each other. In the open position illustrated by solid line representation in Figure 1, mold sections 16 are spaced from each other to permit ejection of previously molded parts and to also permit introduction of labels into the cavity sections 18 of one mold section 16 in preparation for the next cycle. In the closed position of the mold 14 as illustrated by phantom line representation in Figure 1, each pair of opposed cavity sections 18 cooperate to define an enclosed cavity 22 in which the blow molding is performed. It should be appreciated that it is also possible to use an in-mold label dispenser 10 that provides labels to each cavity section 18 of each cavity 22 in order to provide labeling of both sides of the blow molded part.

With continuing reference to Figures 1 and 2, the in-mold label dispenser 10 includes a base 24 that is located below the mold 14 and has first and second portions 26 and 28 located on opposite sides of the mold. A plurality of label magazines 30 corresponding to the number of cavity sections 18 in each mold section 16 are mounted on the first base portion 26 of base 24 adjacent the mold 14 and each includes a stack 32 of labels 34 to be supplied to the mold 14. A dispensing head 36 is also mounted on the first base portion 26 as is hereinafter described and is movable between a withdrawn position adjacent the label magazines 30 as illustrated in Figure 1 and an inserted position between the open mold sections as illustrated in Figure 2. A plurality of label carriers 38 corresponding in number to the number of label magazines 30 and cavity sections 18 in each mold section are mounted on the dispensing head 36 to provide support of the labels 34 during the in-mold labeling operation. Label carriers 38 are preferably constructed as vacuum cups to which a vacuum is supplied to secure the labels during the transfer operation from the magazines 30 to the mold cavity sections 18. As the labels 34 are initially placed in the mold cavity sections 18 as is hereinafter more fully described, it is possible to use positive pressure gas to release the labels from the label carriers 38 and, at the same time, a vacuum applied in the mold cavity sections 18 then secures the labels in preparation for the blow molding operation.

As illustrated in Figure 1, a first locator 40 of the label dispenser has an elongated shape and is mounted on the dispensing head 36 extending toward the second base portion 28. A second locator 42 of the in-mold label dispenser is mounted on the second base portion 28 in a manner which is also hereinafter more fully described. Upon movement of the dispensing head 36 from the withdrawn position of Figure 1 to the inserted position of Figure 2, the first and second locators 40 and 42 are engaged with each other to cooperate in locating the dispensing head and the label carriers 38 thereon with respect to the open mold 14 to provide accuracy in aligning the labels 34 with respect to the cavity sections 18 that receive the labels. The elongated shape of the first locator 40 preferably has a distal end 44 of a pointed shape, while the second locator 42 has a distal end 46 defining a socket for receiving the pointed distal end 44 of the first locator. Any slight misalignment prior to the initial engagement of the locators 40 and 42 with each other is accommodated for by the locator ends 44 and 46 which ultimately are precisely located with respect to each other upon full engagement as illustrated in Figure 2.

As illustrated in Figures 1, 2, 3A, 3B, 3C, 4, and 5, the in-mold label dispenser 10 also includes first and second supports 48 and 50 that are respectively mounted on the first and second base portions 26 and 28 preferably in a pivotal manner for rotation about a common axis B. The dispensing head 36 and the first locator 40 are mounted on the first support 48 for movement between the withdrawn and inserted positions with respect to the open mold as respectively illustrated in Figures 1 and 2, while the second locator 42 is mounted on the second support 50. A first actuator 52 extends between the first base portion 26 and the first support 48 and is operable to move the first support and the dispensing head 36 thereon between an aligned position with respect to the open mold as illustrated by solid line representation in Figures 1 and 2 and a label transfer position as indicated by phantom line representation. A second actuator 54 extends between the second base portion 28 and the second support 50 and is operable with the dispensing head 36 in the inserted position of Figure 2 to cooperate with the first actuator 52 in moving the dispensing head 36 between the aligned and label transfer positions.

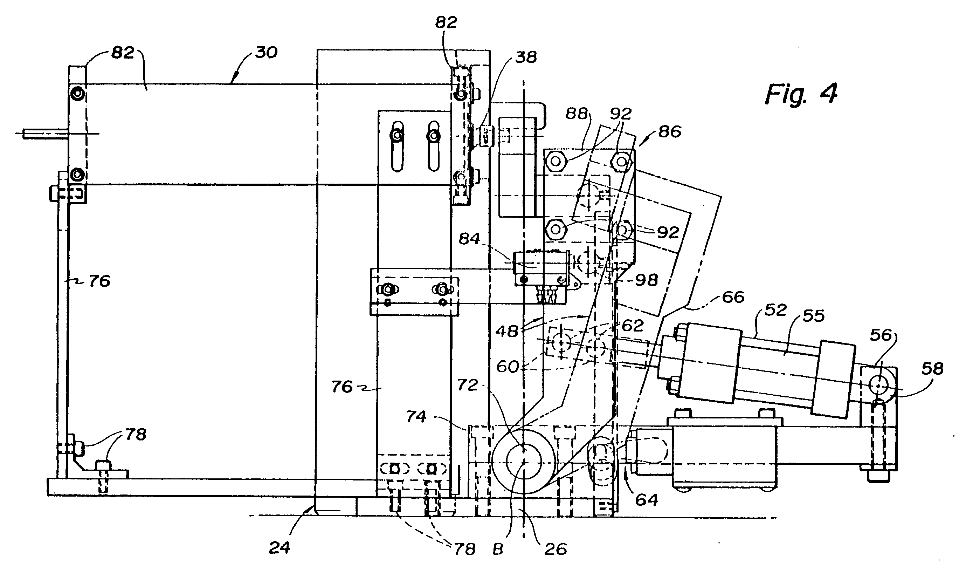

As illustrated in Figure 4, the first actuator 52 is preferably embodied by a cylinder 55 having a cylinder end 56 that is connected by a pivotal connection 58 to the first portion 26 of the base 24. A rod end 60 of the cylinder actuator 52 has a pivotal connection 62 to the pivotal first support 48 on which the dispensing head is movably mounted as is hereinafter more fully described. Extension and retraction of the cylinder actuator 52 pivots the first support 48 and the dispensing head and first locator thereon about axis B between the mold aligned position shown by phantom line representation and the label transfer position shown by solid line representation. A control sensor 64 of any conventional type is mounted in a suitable manner on the first base portion 24 and senses the positioning of the first support 48 in the mold aligned position to provide control thereof during an operational cycle of the in-mold label dispenser.

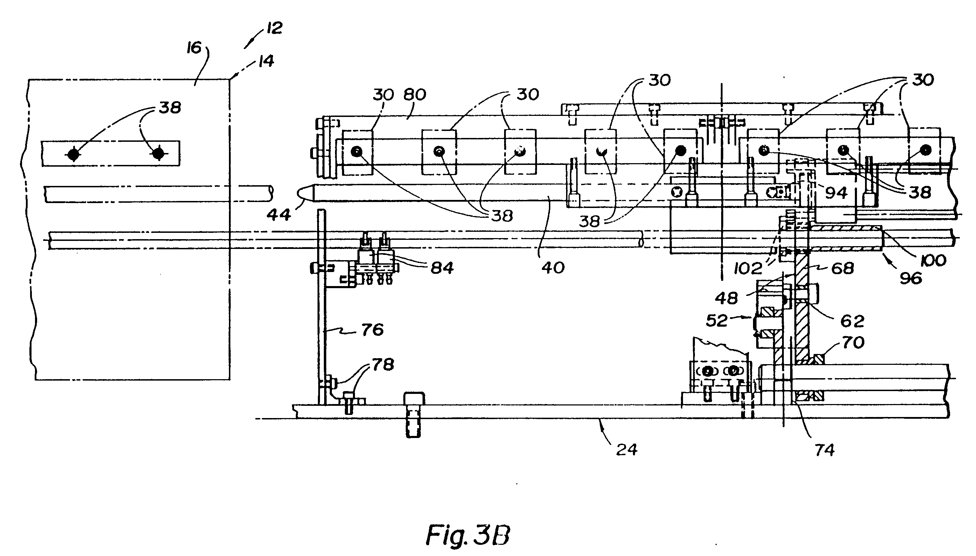

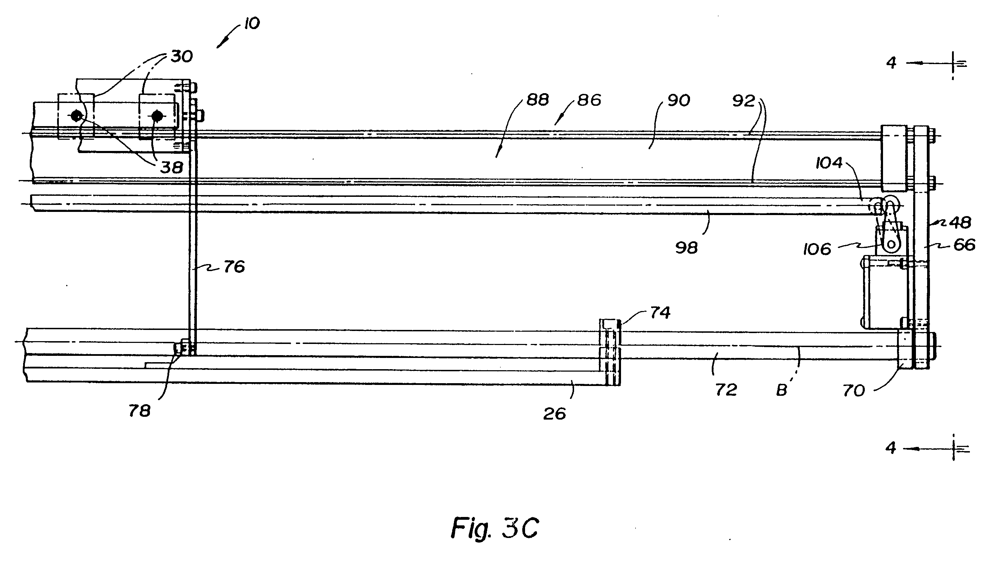

As illustrated by combined reference to Figures 3B, 3C, and 4, the first support 48 preferably includes a pair of spaced plates 66 and 68 that extend vertically and have lower ends pivotally supported by associated bearings 70 on a support shaft 72 for rotation about axis B. Suitable mounts 74 secure the support shaft 72 to the first base portion 26 in any convenient manner. As shown in Figure 3B, the first cylinder actuator 52 has its rod end 60 secured by the pivotal connection 62 to the one plate 68 of the first support 48.

With continued combined reference to Figures 3B, 3C, and 4, vertically extending plates 76 have lower ends secured by connection bolts 78 to the first base portion 26 and have upper ends that support plates 82 on which the label magazines 30 are adjustably secured to permit the proper location thereof with respect to the dispensing head label carriers 38 that provide the label transfer operation. One of the plates 76, illustrated in the left portion of Figure 3B and in Figure 4, supports control sensors 84 that are responsive to movement of the dispensing head to the label transfer position during the operational cycle of the in-mold label dispenser as is hereinafter more fully described.

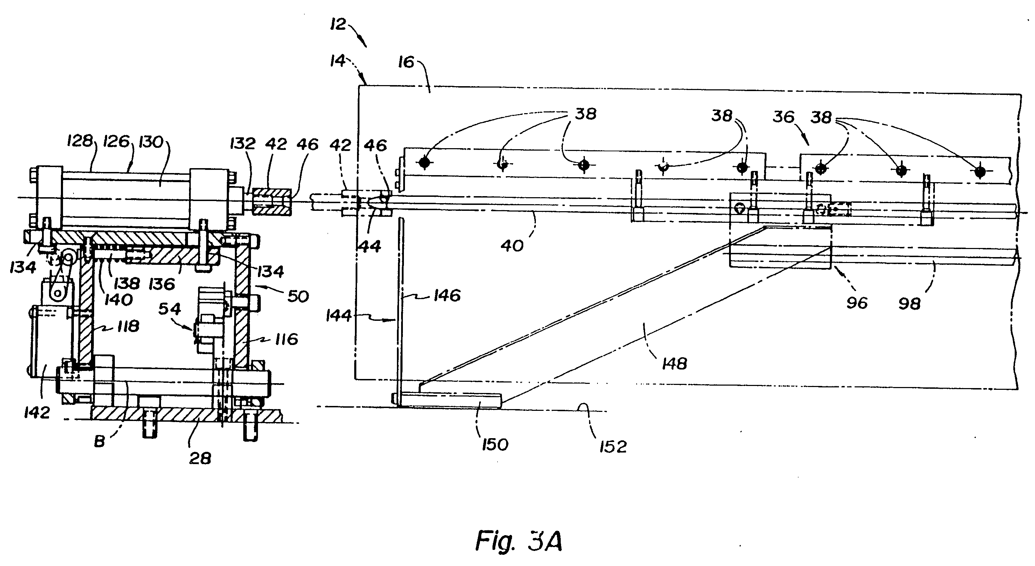

With combined reference to Figures 3A, 3B, 3C, and 4, the in-mold label dispenser also includes a first operator 86 mounted on the first support 48 by attachment to the plates 66 and 68 thereof as is hereinafter more fully described. The operator 86 is movable with the first support 48 during movement thereof between the mold aligned and label transfer positions and is also operable to move the dispensing head 36 between the withdrawn position as illustrated by solid lines in Figure 3B and the inserted position as illustrated by phantom lines in Figure 3A. As best illustrated in Figures 3B and 3C, the first operator 86 is preferably constructed as a cylinder 88 having a cylinder body 90 whose tie-bolt connectors 92 provide connection thereof to the upper ends of the plates 66 and 68 of first support 48. Cylinder 88 as best illustrated in Figures 1 and 2 also has a piston connecting rod 94 that extends outwardly from the cylinder body 90 mounted on the first support 48 as previously described. Operation of the cylinder 88 preferably by a supply of pressurized air extends and retracts the piston connecting rod 94 from the cylinder body 90 to provide the movement of the dispensing head 36 between the withdrawn position of Figure 1 and the inserted position of Figure 2.

With combined reference to Figures 1, 2, and 3A, B, and C, a slide assembly 96 extends between the dispensing head 36 and the first support 48 to prevent rotation of the dispensing head about the connecting rod 94 of cylinder 88. This slide assembly 96 includes an elongated slide member 98 that extends from the dispensing head 36 toward the first support 48. Slide assembly 96 also includes a bushing 100 that is mounted on the first support 48 by attachment to the upper end of plate 68 thereof as illustrated in Figure 3B with the securement thereto being provided by suitable bolts 102. Bushing 100 slidably receives the elongated slide member 98 that extends from the dispensing head 36 to permit the dispensing head movement between the withdrawn and inserted positions under the impetus of the cylinder 88 without any rotation of the dispensing head about the piston connecting rod 94. As illustrated in Figures 3B and 4, the elongated slide member 98 engages the control sensors 84 in the label transfer position of the dispensing head to provide operational control. As illustrated in Figure 3C, the elongated slide member 98 also has a distal end 104 that engages a control sensor 106 mounted on the plate 66 of the first support 48 to indicate movement of the dispensing head to and from the withdrawn position in order to provide control during the operational cycle of the in-mold label dispenser. As previously mentioned, the first locator 40 has an elongated shape that extends away from the dispensing head 36 in an opposite direction as the slide member 98 whose end 104 engages the control sensor 106 to provide this operational control.

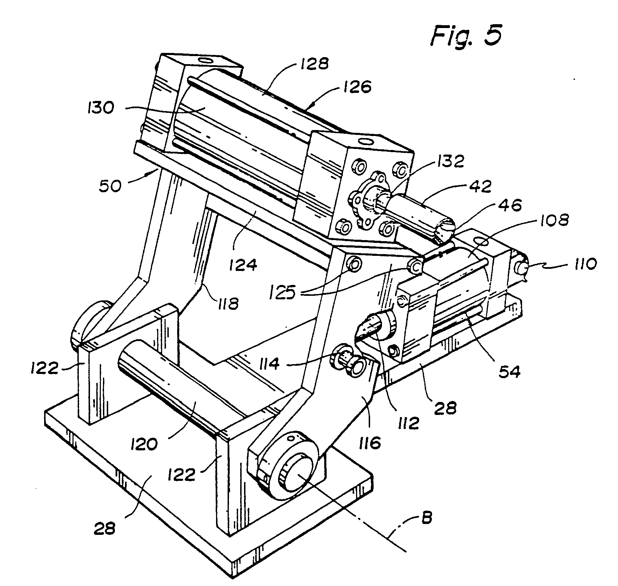

With combined reference to Figures 1, 2, 3A, and 5, the second actuator 54 is embodied by a cylinder 108 having a cylinder body end pivotally secured by a connection 110 (Figure 5) to the second base portion 28 about an axis parallel to the axis B about which both supports rotate as previously described. A piston connecting rod 112 of cylinder 108 is pivotally secured by a connection 114 to one plate 116 of the second support 50. Another plate 118 of the second support has a shape generally similar to the plate 116 with lower ends of both plates pivotally supported by ends of a pin 120 for rotation about axis B. Lugs 122 of the second base portion 28 extend upwardly to provide support of the pin 120. Plates 116 and 118 of the second support 50 have upper ends to which a plate 124 is secured by suitable bolts 126. As is hereinafter more fully described, a second operator 126 mounts the second locator 42 on the plate 124 of second support 50 for movement therewith under the impetus of the second actuator 54 between the mold aligned and the label transfer positions previously discussed.

As best illustrated in Figures 1, 2, 3A, and 5, the second operator 126 moves the second locator 42 on the second support 50 between a withdrawn position with respect to the mold as illustrated in Figure 1 and an inserted position as illustrated in Figure 2 where the second locator engages the first locator 40 at the ends 44 and 46 thereof to cooperate in positioning the dispensing head during the label transfer cycle. This second operator 126 is constructed as a cylinder 128 having a body 130 mounted in a manner which is hereinafter more fully described on the plate 124 of the second support 50. Cylinder 128 also includes a movable piston connecting rod 132 (Figure 5) extending outwardly from the body 130 to support the second locator 46 for movement between the withdrawn and inserted positions.

As illustrated in Figure 3A, a pair of pin and slot connectors 134 mount the cylinder 128 embodying the second operator 126 on the plate 124 of the second support 50 for movement in a direction parallel to the axis B about which both supports are pivoted as previously described. One of the connectors 134 is secured to a control member 136 to which one end of another control member 138 is threaded with its other end extending through a hole in the adjacent plate 118 of the second support 50. A spring 140 extends around the control member 138 and has opposite ends seated against the inner side of the plate 118 and the axial end of the control member 136 to bias the cylinder 128 toward the right. On the outer side of the plate 118 of the second support 50, a control sensor 142 is mounted in any suitable manner. Normally the spring 140 positions the cylinder 128 at its right extreme of travel as illustrated in Figure 3A. Upon movement of the first and second locators 40 and 42 to the inserted position illustrated in Figure 2, the operators 86 and 126 exert a larger biasing force toward the left on the second operating cylinder 128 through the engaged locators 40 and 42 than the second spring 140 does toward the right, such that the second operating cylinder 128 is moved slightly back toward the left as viewed in Figure 3A as the pin and slot connectors 134 allow such motion. This movement of operating cylinder 128 toward the left moves the control members 136 and 138 toward the left against the bias of the spring 140. The control sensor 142 is then engaged by the left end of the control member 138 to provide a control signal indicating that the dispensing head is properly positioned in its inserted position during the operational cycle of the label dispensing.

As best illustrated in Figure 3A, the in-mold label dispenser also includes a skid 144 that extends downwardly from the dispensing head 36 to provide support thereof during movement between the withdrawn and inserted positions previously described. Skid 144 includes a vertically extending leg 146 and an inclined leg 148 which both extend downwardly from the dispensing head 36 to support a lower slide foot 150 of the skid. This slide foot 150 of skid 144 slides along a machine surface 152 as illustrated by phantom line representation to provide the dispensing head support during movement between the withdrawn and inserted positions.

The operational cycle of the in-mold label dispenser 10 as described above will now be given with reference to the schematic views of Figures 1 and 2. Each cycle begins with the dispensing head 36 positioned in its withdrawn position of Figure 1 in the mold aligned position on the support 48 as shown by solid line representation. The operational cycle commences by operation of the first actuator 52 which pivots the support 48 about axis B as previously described to the label transfer position where the label carriers 38 are positioned as shown by phantom line representation to receive the adjacent label 34 of the label stacks 32 in label magazines 30. As previously mentioned, a vacuum is preferably drawn at the label carriers 38 to provide the label securement to the label carriers. Actuator 52 is then operated to pivot the first support 38 back about axis B to the mold aligned position. To simplify the control circuitry, it is also possible to extend and retract the second actuator 54 along with the first actuator 52 even though the resultant movement of the second support 50 and the second locator 42 thereon does not perform any necessary function at this commencement of the cycle.

The first operator 86 then moves the dispensing head 36 and the first locator 40 thereon to the inserted position as the second operator 126 also moves the second locator 42 to the inserted position where the engagement between the ends 14 and 46 thereof accurately positions the dispensing head 36 as previously described. First and second actuators 52 and 54 then simultaneously pivot both the first and second supports 48 and 50 about axis B to move the dispensing head 36 from the mold aligned position illustrated by solid line representation in Figure 2 to the label transfer position where the label carriers 38 position the labels 34 thereon within the mold cavity sections 18 as illustrated by phantom line representation. The vacuum drawn at the label carriers 38 is then terminated as the vacuum is drawn at the mold cavity sections to thereby secure the labels within the one mold section 16 in preparation for the blow molding operation. It is also possible to supply positive pressure air through the label carriers 38 to assist in the transfer of the labels to the mold section 16. After the labels are transferred, the first and second actuators 52 and 54 pivot the first and second supports 48 and 50 about axis B so that the dispensing head 36 is moved back to the mold aligned position shown by solid line representation in Figure 2. First operator 86 then moves the dispensing head 36 and the first locator 40 from the inserted position of Figure 2 back to the withdrawn position of Figure 1 as the second operator 126 likewise moves the second locator 42 from the inserted position of Figure 2 back to the withdrawn position of Figure 1. The in-mold label dispenser is then ready for another cycle.

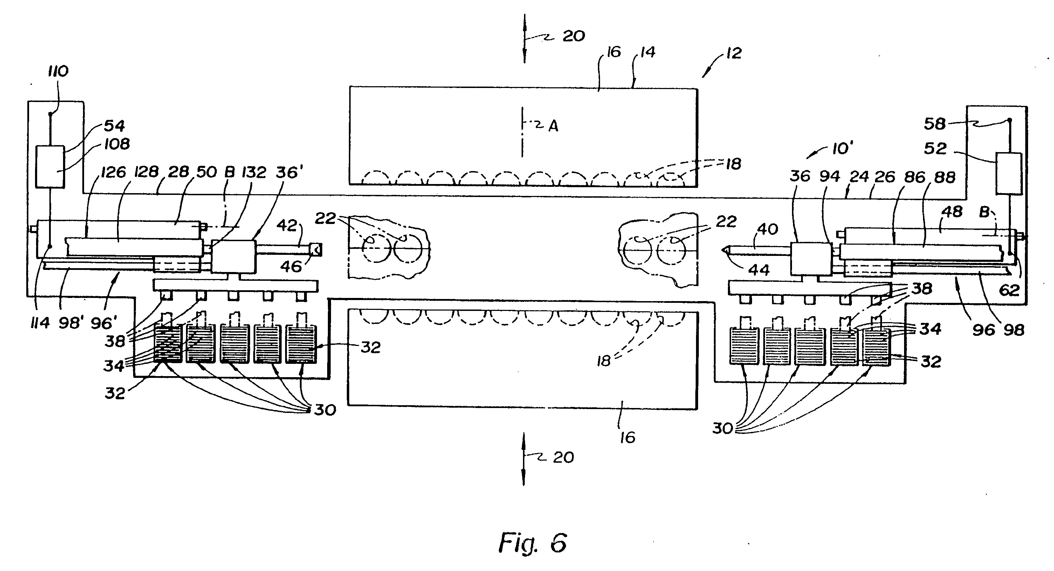

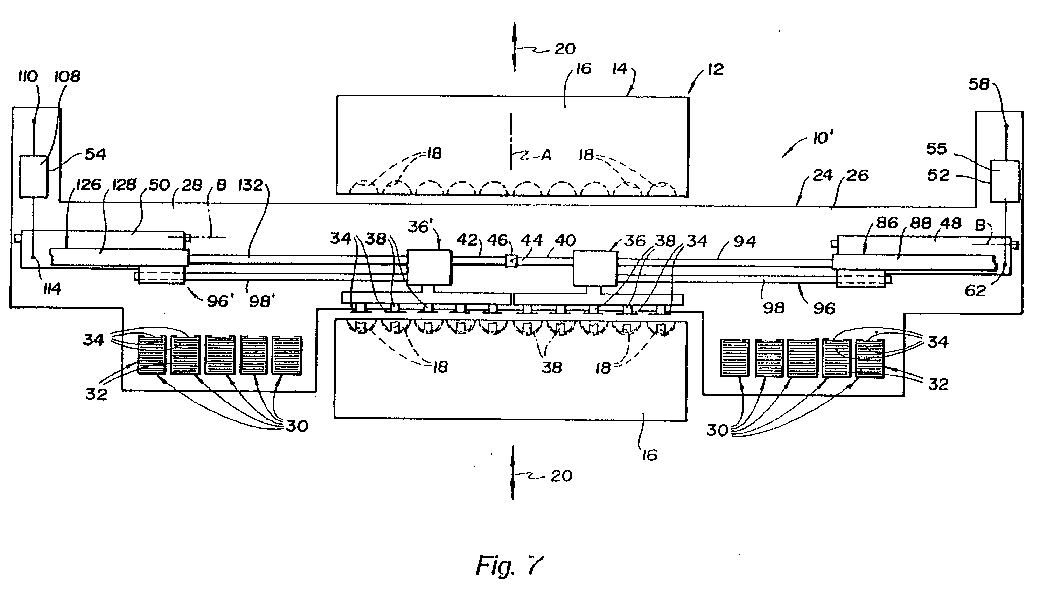

With reference to Figures 6 and 7, an alternate embodiment of the in-mold label dispenser is indicated by 10' and is utilized with the same plastic blow molding machine 12 described in connection with the embodiment of Figures 1 through 5. This in-mold label dispenser 10' has a construction which is similar to the previously described embodiment such that the same reference numerals are applied thereto and much of the previous description is applicable and need not be repeated.

In-mold label dispenser 10' includes a first dispensing head 36 mounted on the first base portion 26 by a first support 48 that is pivoted about axis B between the mold aligned and label transfer positions by first actuator 52 in the same manner as previously described to provide transfer of some but not all of the labels 34 to the mold 14 for the in-mold labeling. In addition, in-mold label dispenser 10' includes at least one second label magazine 30 mounted on the second base portion 28 and preferably includes a plurality of such label magazines equal in number to one-half of the cavity sections 18 on the mold section 16 to be labeled which is the same number of the label magazines mounted on the first base portion 26. A second dispensing head 36' is mounted on the second base portion 28 for movement between the withdrawn position illustrated in Figure 6 and the inserted position illustrated in Figure 7. The second dispensing head 36' is supported on the second support 50 which is pivoted by the second actuator 54 for movement between the mold aligned and label transfer positions in the manner previously described.

First and second operators 86 and 126 respectively move the dispensing heads 36 and 36' between the withdrawn position of Figure 6 and the inserted position of Figure 7. The first and second locators 40 and 42 are respectively carried by the first and second dispensing heads 36 and 36' and are engaged with each other in the inserted position to provide accurate location of the dispensing heads during the label transfer operation in order to insure good registration of the labels with the mold cavity sections 18. First and second slide assemblies 96 and 96' respectively extend from the first and second dispensing heads 36 and 36' to the first and second supports 48 and 50 to prevent rotation of the dispensing heads about the piston connecting rods 94 and 132 of the cylinders 88 and 128 that embody the first and second operators 86 and 126. Both of the label carriers 36 and 36' include the label carriers 38 for transferring labels from the associated sets of label magazines 30 to the mold 14.

The operational cycle of the in-mold label dispenser 10' begins with both of the dispensing heads 36 and 36' positioned in the withdrawn position of Figure 6 with the first and second actuators 52 and 54 positioning the first and second supports 48 and 50 so that the dispensing heads are in the mold aligned position. Operation of the first and second actuators 52 and 54 then pivots the first and second supports 48 and 50 about axis B to move the dispensing heads 36 and 36' to the label transfer position illustrated by phantom line representation where labels are received by the dispensing head in the manner previously described. First and second actuators 52 and 54 then pivot the first and second supports 48 and 50 and the dispensing heads 36 and 36' thereon back to the mold aligned position whereupon the operators 86 and 126 move the dispensing heads to the inserted position of Figure 7 where the first and second locators 40 and 42 are engaged with each other to accurately align the label carriers with the mold cavity sections 18. First and second actuators 52 and 54 then pivot the first and second supports and the dispensing heads 36 and 36' to the label transfer position where the label carriers 38 are located as shown by phantom line representation in Figure 7 to provide the transferring of the labels to the mold cavity sections 18. Movement of the dispensing heads 36 and 36' back to the mold aligned position by operation by first and second actuators 52 and 54 is then followed by movement of the dispensing heads under the impetus of the operators 86 and 126 back to the withdrawn position of Figure 6 to complete the operational cycle.

It should be appreciated that the alternate embodiment of Figures 6 and 7 like the embodiment of Figures 1 and 5 can be used with each dispensing head supplying only one label during each cycle. However, both- embodiments of the in-mold label dispenser have particular utility when a greater number of labels are to be transferred, especially when the mold cavity sections are positioned in alignment with each other such that a relatively great distance must be spanned while still accurately locating the labels upon transfer to the mold.

## Claims

1. An in-mold label dispenser (10) for a plastic blow molding machine (12) including a mold (14) having a pair of mold sections (16) each of which includes a cavity section (18), said mold sections (16) being movable toward and away from each other between an open position spaced from each other and a closed position where the cavity sections (18) thereof cooperate to define an enclosed cavity (22) in which blow molding is performed, a base (24) having first and second portions (26, 28) located on opposite sides of the mold (14), a label magazine (30) mounted on the first base portion (26) on one side of the mold (14), a dispensing head (36) mounted on the first base portion (26) for movement between a withdrawn position adjacent the label magazine (30) and an inserted position between the open mold sections (16) ; a label carrier (38) on the dispensing head (36) for receiving a label (34) from the magazine (30) with the dispensing head (36) in the withdrawn position and for transferring the label (34) to the cavity section (18) of one mold section (16) with the dispensing head (36) in the inserted position between the open mold sections (16) ; characterised in that a first locator (40) is provided on the dispensing head (36) ; and a second locator (42) is mounted on the second base portion (28) and is engaged with the first locator (40) upon movement of the dispensing head (36) to the inserted position to cooperate in locating the dispensing head (36) and label carrier (38) thereof with respect to the open mold (14) to provide accuracy in aligning the label (34) with respect to the cavity section (18) that receives the label (34).

2. An in-mold label dispenser (10) as claimed in claim 1 further including first and second supports (48, 50) respectively mounted for movement on the first and second base portions (26, 28), the dispensing head (36) and the first locator (40) being mounted on the first support (48) for movement between the withdrawn and inserted positions with respect to the open mold (14), the second locator (42) being mounted on the second support (50), a first actuator (52) extending between the first base portion (26) and the first support (48) and being operable to move the first support (48) and the dispensing head (36) thereon between an aligned position with respect to the open mold (14) and a label transfer position, and a second actuator (54) extending between the second base portion (28) and the second support (50) and being operable with the dispensing head (36) in the inserted position to cooperate with the first actuator (40) in moving the dispensing head (36) between the mold aligned and label transfer positions.

3. An in-mold label dispenser (10) as claimed in claim 2 further including a first operator (86) mounted on the first support (48) for movement therewith and operable to move the dispensing head (36) between the withdrawn and inserted positions.

4. An in-mold label dispenser (10) as claimed in claim 3 wherein the first operator (86) comprises a cylinder (88) having a body (90) mounted on the first support (48) and also having a movable connecting rod (94) extending outwardly from the body (90) to the dispensing head (36), and a slide assembly (96) that extends between the dispensing head (36) and the first support (48) to prevent rotation of the dispensing head (36) about the cylinder connecting rod (94).

5. An in-mold label dispenser (10) as claimed in claim 4 wherein the slide assembly (96) includes an elongated slide member (98) tht extends from the dispensing head (36) toward the first support (48), and the slide assembly (96) also includes a bushing (100) on the first support (48) that slidably receives the elongated slide member (98) to permit the movement of the dispensing head (36) between the withdrawn and inserted positions under the action of the cylinder (88).

6. An in-mold label dispenser (10) as claimed in claim 5 wherein the first locator (40) has an elongated shape and extends away from the dispensing head (36) in an opposite direction to the elongated slide member (98) of the slide assembly (96).

7. An in-mold label dispenser (10) as claimed in any one of claims 3 to 6, and further including a second operator (126) that moves the second locator (42) on the second support (50) between a withdrawn position with respect to the mold (14) and an inserted position where the second locator (42) engages the first locator (40) to cooperate therewith in positioning the dispensing head (36).

8. An in-mold label dispenser (10) as claimed in claim 7 wherein the second operator (126) comprises a cylinder (128) having a body mounted on the second support (50) and having a movable connecting rod (132) extending from the body (130) thereof to support the second locator (42) for movement between the withdrawn and inserted positions.

9. An in-mold label dispenser (10) as claimed in any one of claims 1 to 6 further including a skid (144) that extends downwardly from the dispensing head (36) to provide support thereof during movement between the withdrawn and inserted positions.

10. An in-mold label dispenser (10') as claimed in claim 1 further including a second label magazine (30) mounted on the second base portion (28) on the opposite side of the mold (14) to the first base portion (26), a second dispensing head (36') mounted on the second base portion (28) for movement between a withdrawn position adjacent the second label magazine (30) and an inserted position between the open mold sections (16), the second locator (42) being mounted on the second dispensing head (36') and being engaged with the first locator (40) upon movement of the first and second dispensing heads (36, 36') to the inserted positions thereof between the open mold sections (16), and a label carrier (38) on the second dispensing head (36') for receiving a label (34) from the second magazine (30) in the withdrawn position and for transferring the label (34) to the mold (14) in the inserted position.

11. An in-mold label dispenser (10') as claimed in claim 10 wherein first and second sets of the label magazines (30) are respectively mounted on the first and second base portions (26, 28), and first and second sets of the label carriers (38) are respectively mounted on the pair of dispensing heads (36, 36') to supply multiple labels (34) to the mold (14) as the dispensing heads (36, 36') move to the inserted positions thereof between the open mold sections (16).

## Ansprüche

1. Anordnung (10) zum Einlegen von Etiketten in eine Form einer Plastik-Blasformmaschine (12), mit einer Form (14) bestehend aus Formteilen (16) mit mindestens je einem Formnest-Bereich (18), die gegeneinander und auseinander zwischen einer offenen und einer geschlossenen Position bewegbar gelagert sind, in der beide Formteile geschlossene Formhöhlungen (22) bilden, in denen das Blas-Formen erfolgt, mit einer Basis (24) mit einem ersten und einem zweiten Bereich (26, 28) zu beiden Seiten der Form (14), ein dem ersten Bereich (26) der Basis zugeordnetes Etiketten-Magazin (30), ein zwischen einer Abnahmeposition benachbart zum Etiketten-Magazin und einer Einsetzposition zwischen den geöffneten Formteilen (16) hin- und herbeweglich angeordneter Ausgabekopf (36), ein dem Ausgabekopf zugeordneter Etiketten-Träger (38) für die Aufnahme von Etiketten in der Aufnahmeposition und für deren Überführen in das Formnest (18) des Formteils in der Einsetzposition des Ausgabekopfes (36) zwischen den geöffneten Formteilen, **dadurch gekennzeichnet, daß** dem Ausgabekopf (36) ein erster positionsbestimmender Anschlag (40) zugeordnet und daß dem zweiten Basisbereich (28) ein zweiter postionsbestimmender Anschlag (42) zugeordnet sind, daß der erste Anschlag (40) mit dem zweiten Anschlag in gegenseitiger Wirkverbindung steht, sobald der Ausgabekopf (36) in die Einsetzposition für das Positionieren des Ausgabekopfes (36) und des Etiketten-Trägers (38) in bezug auf die geöffnete Form (14) gelangt zwecks genauer Ausrichtung der Etiketten (34) in bezug auf den das Etikett aufnehmenden Formnest-Bereich (18).

2. Anordnung (10) nach Anspruch 1, **dadurch gekennzeichnet, daß** ein erster und zweiter Support (48, 50) dem ersten und dem zweiten Basis-Bereich (26, 28) beweglich gelagert zugeordnet sind, daß der Ausgabekopf (36) und der erste Anschlag (40) auf dem ersten Support (48) zwischen der Aufnahme- und der Einsetzposition in bezug auf die offene Form (14) beweglich gelagert sind, daß der zweite Anschlag (42) auf dem zweiten Support (50) gelagert ist, daß erste Betätigungsmittel (52) zwischen dem zwischen dem ersten Basis-Bereich (26) und dem ersten Support (48) vorgesehen und derart ausgebildet sind, daß der erste Support (48) und die zugeordneten Ausgabeköpfe (36) zwischen einer in bezug auf die geöffnete Form (14) ausgerichteten Position und einer Etikettentransferlage bewegbar sind, und daß zweite Betätigungsorgane (54) sich zwischen dem zweiten Basis-Bereich (28) und dem zweiten Support (50) erstrecken und derart ausgebildet sind, daß sie, wenn der Support mit dem Ausgabekopf (36) in der Einsetzposition ist, mit den ersten Betätigungsmitteln zusammenwirken, um den Ausgabekopf (36) zwischen der in bezug auf die Form ausgerichteten Lage und der Etikettentransferlage zu bewegen.

3. Anordnung (10) nach Anspruch 2, **dadurch gekennzeichnet, daß** ein erstes auf dem ersten Support (48) mit diesem beweglich angeordnetes Betätigungsorgan (86) für das Bewegen des Ausgabekopfes (36) zwischen der Aufnahme- und der Einsetzposition vorgesehen ist.

4. Anordnung (10) nach Anspruch 3, **dadurch gekennzeichnet, daß** das erste Betätigungsorgan (86) einen Zylinder (88) mit einem Gehäuse (90) umfaßt, das auf dem ersten Support (48) angeordnet ist und eine aus dem Gehäuse bis zum Ausgabekopf ragende Kolbenstange (94) aufweist, und daß Führungsmittel (96) zwischen dem Ausgabekopf (36) und dem ersten Support (48) durch die Kolbenstange (96) auslösbare Drehbewegungen des Ausgabekopfes verhindern.

5. Anordnung (10) nach Anspruch 4, **dadurch gekennzeichnet, daß** die Führungsmittel (96) ein langgestrecktes sich vom Ausgabekopf (36) zum ersten Support (48) erstreckendes Gleitorgan (98) umfassen, und daß ferner zwecks Aufnahme des langgestreckten Gleitorgans (98) eine Büchse (100) an dem ersten Support (48) vorgesehen ist, um das Bewegen des Ausgabekopfes (36) zwischen der Aufnahme- in die Einsetzpositon unter der Wirkung des Zylinders (88) zu ermöglichen.

6. Anordnung (10) nach Anspruch 5, **dadurch gekennzeichnet, daß** der erste Anschlag (40) eine langgestreckte Form aufweist und sich vom Ausgabekopf (36) entgegengesetzt zu dem langgestreckten Gleitorgan (98) des Führungsmittels (96) wegerstreckt.

7. Anordnung (10) nach einem der Ansprüche 3 bis 6, **dadurch gekennzeichnet, daß** ein zweites Betätigungsorgan (126) am zweiten Support (50) vorgesehen ist zwecks Bewegen des zweiten Anschlages (42) zwischen der Aufnahme- und der Einsetzposition, in der der zweite Anschlag (42) mit dem ersten Anschlag (40) in Eingriff gelangt zwecks Positionierung des Ausgabekopfes in bezug auf die Form (14).

8. Anordnung (10) nach Anspruch 7, **dadurch gekennzeichnet, daß** das zweite Betätigungsorgan (126) einen Zylinder (128) mit einem am zweiten Support befestigten Gehäuse (130) umfaßt und eine aus dem Gehäuse (130) ragende den Anschlag tragende Kolbenstange (132) aufweist zwecks Bewegen des Anschlages zwischen der Aufnahme- und der Einsetzposition.

9. Anordnung (10) nach einem der Ansprüche 1 bis 6, **dadurch gekennzeichnet, daß** dem Ausgabekopf (36) eine nach unten ragende Rufe (144) zur Stützung des Ausgabekopfes während der Bewegungen zwischen der Aufnahme- in die Einsetzposition zugeordnet ist.

10. Anordnung (10) nach Anspruch 1, **gekennzeichnet durch** ein dem zweiten Basis-Bereich (28) zugeordnetes zweites Etiketten-Magazin (30) auf der dem ersten basis-bereich (26) abgewandten Seite der Form (14), durch einen zweiten dem zweiten Basis-Bereich (28) zugeordneten Ausgabekopf (36') für das bewegen zwischen der dem zweiten Etiketten-Magazin (30) benachbarten Aufnahmein die Einsetzposition zwischen den geöffneten Formteilen (16), wobei der zweite Anschlag (42) am zweiten Ausgabekopf (36') gelagert ist zwecks Eingriff mit dem ersten Anschlag (40) nach dem bewegen von erstem und zweitem Ausgabekopf (36, 36') in die Einsetzpositionen zwischen die geöffneten Formteile (16), und daß ein Etiketten-Träger (38) am zweiten Ausgabekopf (36') für die Aufnahme der Etiketten (34) aus dem zweiten Etiketten-Magazin (30) in der Aufnahmeposition und für den Transfer der Etiketten (34) zur Form (14) in die Einsetzposition vorgesehen ist.

11. Anordnung (10) nach Anspruch 10, **dadurch gekennzeichnet, daß** ein erstes und zweites Etiketten-Magazin dem ersten und zweiten Basis-bereich (26, 28) zugeordnet und erste und zweite Etiketten-Träger (38) an den zugeordneten Paaren von Aufnahmeköpfen (36, 36') zwecks Überführen von Mehrfach-Etiketten in die Form (14) von der Aufnahme- in die Einsetzposition zwischen den geöffneten Formteilen vorgesehen sind.

## Revendications

1. Distributeur d'étiquettes dans le moule (10) pour une machine de moulage par soufflage de matière plastique (12) comprenant un moule (14) constitué de deux parties de moule (16) dont chacune définit une partie de cavité (18), lesdites parties de moule (16) pouvant être rapprochées et éloignées l'une de l'autre entre une position d'ouverture, dans laquelle elles sont espacées l'une de l'autre, et une position de fermeture dans laquelle leurs parties de cavité (18) coopèrent pour définir une cavité fermée (22) dans laquelle est effectué le moulage par soufflage, une base (24) comportant une première et une deuxième parties (26, 28) situées sur des côtés opposés du moule (14), un magasin d'étiquettes (30) monté sur la première partie (26) de la base, d'un côté du moule (14), une tête de distribution (36) montée sur la première partie de la base (26) pour un mouvement entre une position de recul, adjacente au magasin d'étiquettes (30), et une position d'insertion entre les parties de moule ouvertes (16), un porte-étiquette (38) monté sur la tête de distribution (36) pour recevoir une étiquette (34) du magasin (30) lorsque la tête de distribution (36) est dans la position de recul et pour transférer l'étiquette (34) à la partie de cavité (18) d'une partie de moule (16) lorsque la tête de distribution (36) est dans la position d'insertion entre les parties de moule ouvertes (16) ; caractérisé en ce qu'un premier positionneur (40) est prévu sur la tête de distribution (36), et un deuxième positionneur (42) est monté sur la deuxième partie de base (28) et s'accouple avec le premier positionneur (40), lors du mouvement de la tête de distribution (36) à la position d'insertion, de manière a coopérer pour positionner la tête de distribution (36) et son porte-étiquette (38) par rapport au moule ouvert (14) afin d'obtenir un alignement précis de l'étiquette (34) par rapport à la partie de cavité (18) qui reçoit l'étiquette (34).

2. Distributeur d'étiquettes dans le moule (10) suivant la revendication 1, comprenant en outre un premier et un deuxième supports (48, 50) respectivement montés pour un mouvement sur les première et deuxième parties (26, 28) de la base, la tête de distribution (36) et le premier positionneur (40) étant montés sur le premier support (48) pour un mouvement entre les positions de recul et d'insertion par rapport au moule ouvert (14), le deuxième positionneur (42) étant monté sur le deuxième support (50), un premier actionneur (52) s'étendant entre la première partie de base (26) et le premier support (48) et agissant pour déplacer le premier support (48) et la tête de distribution (36) portée par celui-ci entre une position alignée par rapport au moule ouvert (14) et une position de transfert d'étiquette, et un deuxième actionneur (54) s'étendant entre la deuxième partie de base (28) et le deuxième support (50) et agissant, lorsque la tête de distribution (36) est dans la position d'insertion, de manière à coopérer avec le premier actionneur (40) pour déplacer la tête de distribution (36) entre la position d'alignement avec le moule et la position de transfert d'étiquette.

3. Distributeur d'étiquettes dans le moule (10) suivant la revendication 2, comprenant en outre un premier organe de manoeuvre (86) monté sur le premier support (48) de manière à se déplacer arec celui-ci et agissant pour déplacer la tête de distribution (36) entre la position de recul et la position d'insertion.

4. Distributeur d'étiquettes dans le moule (10) suivant la revendication 3, dans lequel le premier organe de manoeuvre (86) comprend un vérin (88) comportant un corps (90) monté sur le premier support (48) et comportant également une tige de liaison mobile (94) qui s'étend à l'extérieur du corps (90) jusqu'à la tête de distribution (36), et un dispositif coulissant (96) qui s'étend entre la tête de distribution (36) et le premier support (48) pour empêcher la rotation de la tête de distribution (36) autour de la tige de liaison du vérin (94).

5. Distributeur d'étiquettes dans le moule (10) suivant la revendication 4, dans lequel le dispositif coulissant (96) comprend un coulisseau allongé (98) qui s'étend à partir de la tête de distribution (36) vers le premier support (48), et le dispositif coulissant (96) comprend également un manchon (100) monté sur le premier support (48) et qui reçoit de façon coulissante le coulisseau allongé (98) pour permettre le mouvement de la tête de distribution (36) entre la position de recul et la position d'insertion sous l'action du vérin (88).

6. Distributeur d'étiquettes dans le moule (10) suivant la revendication 5, dans lequel le premier positionneur (40) est de forme allongée et s'étend à partir de la tête de distribution (36) dans une direction opposée au coulisseau allongé (98) du dispositif coulissant (96).

7. Distributeur d'étiquettes dans le moule (10) suivant l'une quelconque des revendications 3 à 6, et comprenant en outre un deuxième organe de manoeuvre (126) qui déplace le deuxième positionneur (42) sur le deuxième support (50) entre une position de recul par rapport au moule (14) et une position d'insertion dans laquelle le deuxième positionneur (42) vient en prise avec le premier positionneur (40) pour coopérer avec celui-ci afin de positionner la tête de distribution (36).

8. Distributeur d'étiquettes dans le moule (10) suivant la revendication 7, dans lequel le deuxième organe de manoeuvre (126) comprend un vérin (128) comportant un corps monté sur le deuxième support (50) et comportant une tige de liaison mobile (132) qui s'étend à partir de ce corps (130) de manière à supporter le deuxième positionneur (42) pour un mouvement entre la position de recul et la position d'insertion.

9. Distributeur d'étiquettes dans le moule (10) suivant l'une quelconque des revendications 1 à 6, comprenant en outre un châssis (144) qui s'étend vers le bas à partir de la tête de distribution (36) de manière à constituer un support pour celle-ci pendant le mouvement entre la position de recul et la position d'insertion.

10. Distributeur d'étiquettes dans le moule (10') suivant la revendication 1, comprenant en outre un deuxième magasin d'étiquettes (30) monté sur la deuxième partie de base (28) du côté du moule (14) opposé à la première partie de base (26), une deuxième tête de distribution (36') montée sur la deuxième partie de base (28) pour un mouvement entre une position de recul adjacente au deuxième magasin d'étiquettes (30) et une position d'insertion entre les parties de moule ouvertes (16), le deuxième positionneur (42) étant monté sur la deuxième tête de distribution (36') et venant en prise avec le premier positionneur (40) lors du mouvement des première et deuxième têtes de distribution (36, 36') à leurs positions d'insertion entre les parties de moule ouvertes (16), et un porte-étiquette (38) monté sur la deuxième tête de distribution (36') pour recevoir une étiquette (34) du deuxième magasin (30) dans la position de recul et pour transférer l'étiquette (34) au moule (14) dans la position d'insertion.

11. Distributeur d'étiquettes dans le moule (10') suivant la revendication 10, dans lequel un premier et un deuxième groupes de magasins d'étiquettes (30) sont respectivement montés sur les première et deuxième parties de base (26, 28), et un premier et un deuxième groupes de porte-étiquettes (38) sont respectivement montés sur les deux têtes de distribution (36, 36') pour fournir des étiquettes multiples (34) au moule (14) lorsque les têtes de distribution (36, 36') viennent à leurs positions d'insertion entre les parties de moule ouvertes (16).

*Fig. 1*

Fig. 2

*Fig. 3A*

EP 0 343 155 B1

Fig. 3B

Fig. 3C

EP 0 343 155 B1

Fig. 4

*Fig. 5*

Fig. 6

Fig. 7